**Europäisches Patentamt**

**European Patent Office**

**Office européen des brevets**

(19)

(11) Veröffentlichungsnummer: **0 088 472**
**B1**

(12) **EUROPÄISCHE PATENTSCHRIFT**

(45) Veröffentlichungstag der Patentschrift:
**03.07.85**

(21) Anmeldenummer: **83200293.5**

(22) Anmeldetag: **28.02.83**

(51) Int. Cl.⁴: **G 11 B 23/04,** G 11 B 15/62

(54) **Magnetbandkassette.**

(30) Priorität: **09.03.82 AT 941/82**

(43) Veröffentlichungstag der Anmeldung:
**14.09.83 Patentblatt 83/37**

(45) Bekanntmachung des Hinweises auf die Patenterteilung:
**03.07.85 Patentblatt 85/27**

(84) Benannte Vertragsstaaten:
**DE FR GB IT**

(56) Entgegenhaltungen:
**CH - A - 377 643**
**DE - A - 2 239 832**
**DE - A - 3 012 488**
**DE - B - 1 089 986**
**FR - A - 2 414 777**
**GB - A - 695 150**
**US - A - 3 576 404**

(73) Patentinhaber: **N.V. Philips' Gloeilampenfabrieken,**
**Groenewoudseweg 1, NL-5621 BA Eindhoven (NL)**

(72) Erfinder: **Prodinger, Arnold, INT. OCTROOIBUREAU B.V.**
**Prof. Holstlaan 6, NL-5656 AA Eindhoven (NL)**

(74) Vertreter: **Smit, Frederik Jan et al, INTERNATIONAAL**
**OCTROOIBUREAU B.V. Prof. Holstlaan 6, NL-5656 AA**
**Eindhoven (NL)**

## Beschreibung

Die Erfindung betrifft eine Magnetbandkassette zur Unterbringung eines zwischen zwei Wickelkernen verlaufenden Magnetbandes, das in seinem Verlauf innerhalb der Kassette längs einer Seitenwand derselben geführt ist, in der mindestens ein Durchbruch vorgesehen ist, durch den mindestens ein zum Abtasten einer Spur am Magnetband vorgesehener Magnetkopf einführbar und mit seiner Lauffläche am Magnetband über dessen gesamte Breite anlegbar ist, wobei das Magnetband mit einem vom Inneren der Kassette her mit ihm zusammenwirkenden, auf einem in der Kassette vorgesehenen Träger angeordneten, elastischen Andruckelement unter Federkraft gegen die Lauffläche des Magnetkopfes gedrückt wird. Eine derartige Magnetbandkassette ist beispielsweise aus der AR-B-352428 bekannt. Um eine einwandfreie Aufzeichnung bzw. Wiedergabe durchführen zu können, muss das Magnetband unter einem entsprechenden Anpressdruck entlang der Lauffläche des Magnetkopfes geführt werden, damit es im Bereich des in diese Lauffläche mündenden Nutzspaltes satt an der Lauffläche anliegt. Hierzu ist in üblicher Weise ein auf einem innerhalb der Kassette untergebrachten Träger angeordnetes, beispielsweise aus Filz bestehendes, elastisches Andruckelement vorgesehen, das unter der Wirkung einer Feder den gewünschten Anpressdruck bewirkt. Diese Feder kann dabei entweder auf den Träger des Andruckelementes einwirken oder der Träger kann selbst als Federelement ausgebildet sein. Wie bisher allgemein üblich, wird ein solches Andruckelement so ausgebildet, dass es das Magnetband über dessen gesamte Breite an die Lauffläche des Magnetkopfes andrückt, wozu die Breite des Andruckelementes etwas grösser als die Breite des Magnetbandes gewählt wird. Beim Fortbewegen des an die Lauffläche des Magnetkopfes angedrückten Magnetbandes muss die den betreffenden Anpressdruck bewirkende Federkraft überwunden werden, was bedeutet, dass die Antriebseinrichtung für das Magnetband in der Lage sein muss, eine entsprechend grosse Kraft aufzubringen.

Die Erfindung hat sich zur Aufgabe gestellt, eine Magnetbandkassette der eingangs angeführten Gattung so auszubilden, dass bei entsprechendem Anpressdruck des Magnetbandes an die Lauffläche des Magnetkopfes die dabei beim Antrieb des Magnetbandes zu überwindende Kraft möglichst gering ist, was insbesondere für Magnetbandkassetten wichtig ist, die zur Verwendung in batteriebetriebenen Geräten vorgesehen sind.

Erfindungsgemäss wird dies dadurch erreicht, dass das Andruckelement zum Zusammenwirken mit nur einem asymmetrisch zur Längssymmetrieebene des Magnetbandes liegenden Teilbereich der Breite des Magnetbandes ausgebildet ist. Auf diese Weise ist die am Magnetband anliegende Fläche des Andruckelementes kleiner, womit aber bei gleicher Federkraft die mittlere Flächenpressung und damit der Anpressdruck grösser wird. Dies bedeutet aber, dass zum Erreichen eines vorgegebenen Anpressdruckes nunmehr eine geringere Federkraft ausreicht, was wiederum zur Folge hat, dass die Antriebseinrichtung für das Magnetband nur mehr eine geringere Kraft zu liefern in der Lage sein muss. Dadurch, dass in dem Teilbereich der Breite des Magnetbandes mit dem das Andruckelement zusammenwirkt, die vom Magnetkopf am Magnetband abzutastende Spur verläuft, ist sichergestellt, dass gerade im Spurbereich das Magnetband exakt an der Lauffläche des Magnetkopfes anliegt und daher eine Aufzeichnung oder Wiedergabe in einwandfreier Weise erfolgt.

Es sei erwähnt, dass es an sich aus der DE-A-3012488 bekannt ist, das Andruckelement schmäler als das Magnetband auszubilden, wobei es in der Längssymmetrieebene des Magnetbandes angeordnet ist. In dieser DE-A-3012488 wird aber nicht näher auf das Andruckelement eingegangen, da eine ganz andere Aufgabenstellung als in der vorliegenden Anmeldung behandelt wird, nämlich den Lauf des Magnetbandes durch das Vorsehen einer mitlaufenden Rolle zu stabilisieren.

Die Breite des Andruckelementes kann beispielsweise so gewählt werden, dass sie nur etwas grösser ist als die Breite der am Magnetband abzutastenden Spur, in welchem Falle dann die erforderliche Federkraft zum Andrücken des Magnetbandes so gering als möglich ist. Es hat sich jedoch als vorteilhaft erwiesen, wenn das Andruckelement mindestens bis zu dem dem Teilbereich zunächst liegenden Längsrand des Magnetbandes reicht. Hierdurch wird ein allfälliges Abheben des Randbereiches des Magnetbandes von der Lauffläche des Magnetkopfes vermieden und ein besonders sicheres Anliegen des Magnetbandes an der Lauffläche des Magnetkopfes sowie ein einwandfreier Lauf des Magnetbandes bei seiner Fortbewegung erreicht.

Bei einer Kassette, die zum Wenden bestimmt ist und zwei Durchbrüche und zwei Andruckelemente aufweist, die spiegelbildlich zu der senkrecht zur die Durchbrüche aufweisenden Seitenwand verlaufenden Quersymmetrieebene der Kassette liegen, hat sich weiters als vorteilhaft erwiesen, wenn die beiden zum Zusammenwirken mit je nur einem Teilbereich der Breite des Magnetbandes ausgebildeten Andruckelemente spiegelbildlich zur Längssymmetrieebene des Magnetbandes angeordnet sind. Auf diese Weise ist in beiden Wendelagen der Kassette ein gleichartiges Andrücken des Magnetbandes an die Lauffläche des Magnetkopfes erreicht, so dass stets gleiche Betriebsbedingungen vorliegen.

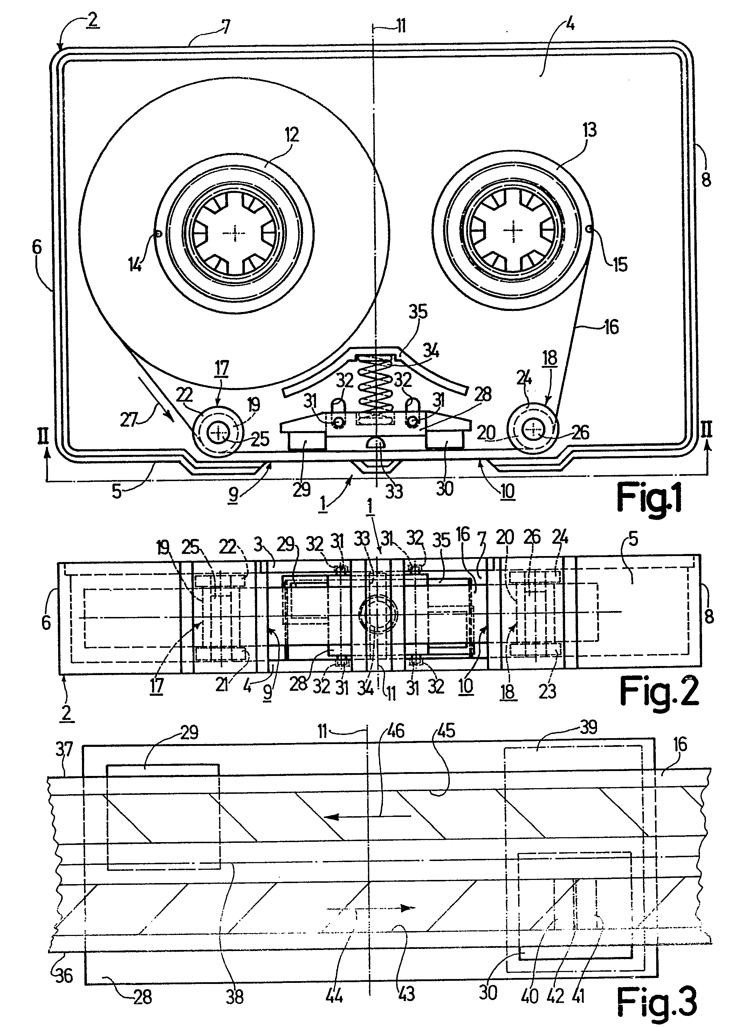

Die Erfindung wird im folgenden anhand der Zeichnungen, in welchen einige Ausführungsbeispiele der Erfindung dargestellt sind, auf die sie jedoch nicht beschränkt sein soll, näher erläutert. Fig. 1 zeigt in Draufsicht eine Magnetbandkassette mit der Deutlichkeit halber nicht dargestellter oberer Deckfläche. Fig. 2 zeigt die Kassette nach Fig. 1 in Seitenansicht nach der Linie II-II in Fig. 1.

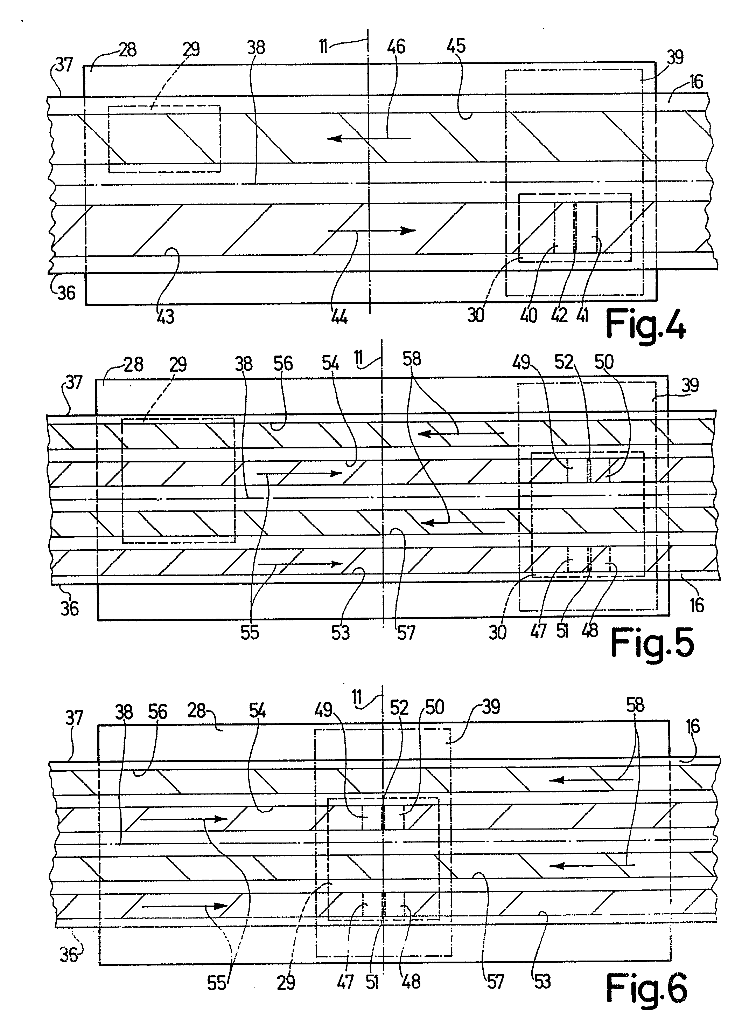

Fig. 3 zeigt zum Ausführungsbeispiel nach den Fig. 1 und 2, bei dem zwei Andruckelemente jeweils bis zu einem Längsrand des Magnetbandes reichen, in vergrössertem Massstab schematisch das Zusammenwirken der Andruckelemente mit dem Magnetband, wobei auch der Verlauf der Spuren und die Position eines Magnetkopfes angedeutet sind. Fig. 4 zeigt in der Darstellungsweise von Fig. 3 ein Ausführungsbeispiel, bei dem die Andruckelemente nur etwas breiter sind als die vom Magnetkopf am Magnetband abzutastende Spur. Fig. 5 zeigt ebenfalls in der Darstellungsweise von Fig. 3 ein Ausführungsbeispiel, bei dem am Magnetband in zwei Richtungen je zwei Spuren abgetastet werden, wie dies beispielsweise bei einer stereophonen Aufzeichnung bzw. Wiedergabe der Fall ist, wobei die Andruckelemente nur etwas breiter sind als die beiden jeweils vom Magnetkopf am Magnetband abzutastenden Spuren. Fig. 6 zeigt eine Abwandlung des Ausführungsbeispieles nach Fig. 5, bei dem der Magnetkopf im Bereich der Quersymmetrieebene der Magnetbandkassette mit dem Magnetband zusammenwirkt und demgemäss nur ein Andruckelement vorgesehen ist.

Die in den Fig. 1 und 2 dargestellte Magnetbandkassette 1 weist eine Gehäuseschale 2 und einen auf diese aufsetzbaren Deckelteil 3 auf. Die Gehäuseschale 2 besteht hierbei aus einem Bodenteil 4 mit Seitenwänden 5, 6, 7 und 8, wobei in der Seitenwand 5 zwei Durchbrüche 9 und 10 vorgesehen sind, die spiegelbildlich zu der senkrecht zu dieser Seitenwand 5 verlaufenden Quersymmetrieebene 11 der Kassette liegen. Im Inneren der Kassette sind zwei nebeneinander liegende, drehbar gelagerte Wickelkerne 12 und 13 untergebracht, an denen mittels je eines Klemmstiftes 14 bzw. 15 die Enden eines Magnetbandes 16 befestigt sind, das vom Wickelkern 12 entlang der Seitenwand 5 der Kassette 1 zum Wickelkern 13 verläuft. Zur Führung des Magnetbandes im Bereich der Seitenwand 5 mit ihren Durchbrüchen 9 und 10 sind zwei ebenfalls spiegelbildlich zur Quersymmetrieebene 11 angeordnete Umlenkelemente 17 und 18 vorgesehen, die im vorliegenden Fall aus Hülsen 19 bzw. 20 bestehen, die mit seitlichen Flanschen 21, 22 bzw. 23, 24 versehen sind. Zur Montage dieser Hülsen 19 bzw. 20 innerhalb der Kassette sind sie auf von der Bodenfläche 4 der Gehäuseschale 2 auskragende Stifte 25 bzw. 26 aufgesetzt. Die seitlichen Flansche 21, 22 bzw. 23, 24 dieser beiden Umlenkelemente 17 bzw. 18 verlaufen neben den Längsrändern des Magnetbandes 16, wodurch sie eine Geradführung für das Magnetband bilden. Selbstverständlich könnten diese Umlenkelemente 17 bzw. 18 auch anders ausgebildet sein, wie beispielsweise als mitlaufende Rollen oder überhaupt nur als einfache Stifte.

Die in der Seitenwand 5 vorgesehenen Durchbrüche 9 und 10 dienen in bekannter Weise dazu, dass mindestens ein Magnetkopf mit dem Magnetband in Wirkverbindung gebracht werden kann. Durch die zur Quersymmetrieebene 11 spiegelbildliche Anordnung der Durchbrüche 9 und 10 ist die Kassette wendbar, so dass mit einem Magnetkopf, wobei dessen Nutzspalt innerhalb einer Längshälfte des Magnetbandes liegt, in zueinander entgegengesetzten Richtungen zwei Spuren abgetastet werden können. Es ist aber auch möglich, in beide Durchbrüche 9 und 10 gleichzeitig je einen Magnetkopf einzuführen, wobei dann in bekannter Weise der, in der Laufrichtung des Magnetbandes gesehen, voran liegende Magnetkopf als Aufzeichnungs- und/oder Wiedergabekopf und der andere Magnetkopf als Löschkopf ausgebildet sein kann. Wird die normale Laufrichtung des Magnetbandes in der Richtung des Pfeiles 27 angenommen, so wäre daher in den Durchbruch 9 der Löschkopf und in den Durchbruch 10 der Aufzeichnungs- und/oder Wiedergabekopf einzuführen. Es kann aber auch vorgesehen sein, dass ein Löschkopf nur dann in den Durchbruch 9 eingeführt wird, wenn tatsächlich ein Löschvorgang vorgenommen werden soll.

Um eine einwandfreie Aufzeichnung oder Wiedergabe durchführen zu können, muss das Magnetband an die Lauffläche des betreffenden Magnetkopfes angedrückt werden. Hierzu ist innerhalb der Kassette, das Magnetband 16 hintergreifend, ein Träger 28 mit zwei elastischen Andruckelementen 29 und 30 angeordnet, wobei die beiden Andruckelemente spiegelbildlich zur Quersymmetrieebene 11 je hinter einem der beiden Durchbrüche 9 bzw. 10 liegen. Im vorliegenden Fall ist der Träger 28 senkrecht zur die beide Durchbrüche 9 und 10 aufweisenden Seitenwand 5 der Kassette verschiebbar angeordnet, wozu vier an ihm vorgesehene Ansätze 31 in korrespondierende Ausnehmungen 32, die im Bodenteil 4 bzw. Deckelteil 3 der Kassette vorgesehen sind, hineinragen. Die Verschiebbarkeit des Trägers 28 in Richtung zum Magnetband 16 hin wird durch einen von der Bodenfläche 4 auskragenden stiftförmigen Ansatz 33 begrenzt, an dem der Träger 28 unter Wirkung einer Feder 34 zur Anlage kommt, sofern in keinen der beiden Durchbrüche 9 und 10 ein Magnetkopf eingeführt ist, wie dies Fig. 1 zu entnehmen ist. Wie ersichtlich, stützt sich hierbei die Feder 34 einerseits am Träger 28 und andererseits auf einem im Inneren der Gehäuseschale 2 vorgesehenen Widerlager 35 ab. Die gesamte Anordnung von Träger 28, Feder 34 und Widerlager 35 ist wieder spiegelbildlich zur Quersymmetrieebene 11 aufgebaut, so dass die beiden elastischen Andruckelemente 29 und 30 in beiden Wendelagen der Kassette gleichermassen zur Wirkung kommen. Selbstverständlich könnten diese beiden Andruckelemente 29 und 30 auch noch auf andere Art und Weise innerhalb der Kassette angeordnet sein. So könnte beispielsweise für jedes der beiden Andruckelemente ein eigner Träger vorgesehen sein, wobei dann auf beide Träger entweder eine einzige Feder oder je für sich eine Feder einwirken kann. Ein solcher Träger könnte aber auch unmittelbar durch eine Blattfeder gebildet werden, die an ihren beiden Enden kassettenseitig eingespannt ist, wie dies ebenfalls bekannt ist.

Für die einwandfreie Durchführbarkeit einer Aufzeichnung oder Wiedergabe ist es, wie bereits erwähnt, von ausschlaggebender Bedeutung, dass das Magnetband von den Andruckelementen 29 bzw. 30 her in satter Anlage an der Lauffläche eines eine solche Aufzeichnung oder Wiedergabe

3

durchführenden Magnetkopfes gehalten wird, wofür ein entsprechend grosser Anpressdruck notwendig ist. Beim vorliegenden Ausführungsbeispiel wird dieser Anpressdruck durch die Kraft der Feder 34 bewirkt. Diese Federkraft, die über das betreffende Andruckelement 29 bzw. 30 das Magnetband an die Lauffläche eines Magnetkopfes andrückt, hat zur Folge, dass die Antriebseinrichtung zum Fortbewegen des Magnetbandes einen gewissen Mindestbetrag an Kraft aufbringen können muss, um das Magnetband zwischen dem Andruckelement und der Lauffläche des Magnetkopfes hindurchzuziehen.

Insbesondere bei zur Verwendung in batteriebetriebenen Geräten bestimmten Magnetbandkassetten, kann ein solcher Kraftaufwand nachteilig ins Gewicht fallen. Es wird aber auch ganz allgemein angestrebt, dass eine Magnetbandkassette im Betrieb möglichst leichtgängig ist, also das Magnetband mit möglichst geringem Kraftaufwand fortbewegt werden kann, da hierdurch der Bandlauf an sich gleichmässiger wird, was sowohl einen Aufzeichnungs- oder Wiedergabevorgang als auch das Auf- bzw. Abwickeln des Magnetbandes von den Wickelkernen günstig beeinflusst. Insbesondere ist aber eine solche Leichtgängigkeit erforderlich, wenn das Magnetband in Wirkverbindung mit mindestens einem Magnetkopf im Schnellauf fortbewegt werden soll, was beispielsweise wünschenswert ist, um im Schnellauf Markierungen auf dem Magnetband feststellen zu können, da dann in einem solchen Fall die Antriebseinrichtung zum Fortbewegen des Magnetbandes noch mehr Kraft aufzubringen in der Lage sein muss. Demgemäss liegen hier zwei einander widersprechende Anforderungen vor, nämlich einerseits den Anpressdruck für das Magnetband an den Magnetkopf möglichst gross zu machen, um eine einwandfreie Aufzeichnung oder Wiedergabe zu erhalten, und andererseits den Anpressdruck für das Magnetband an den Magnetkopf so klein als möglich zu machen, um das Magnetband mit möglichst geringem Kraftaufwand fortbewegen zu können.

Um den vorstehend angeführten, einander widersprechenden Anforderungen möglichst optimal nachzukommen, ist nun vorgesehen, dass die Andruckelemente 29 bzw. 30 zum Zusammenwirken mit nur einem Teilbereich der Breite des Magnetbandes 16 ausgebildet sind, wobei in diesem Teilbereich die vom Magnetkopf am Magnetband abzutastende Spur verläuft. Beim vorliegenden Ausführungsbeispiel, das eine zum Wenden bestimmte Kassette betrifft, ist dabei vorgesehen, dass die beiden zum Zusammenwirken mit je nur einem Teilbereich der Breite des Magnetbandes ausgebildeten Andruckelemente 29 und 30 spiegelbildlich zur Längssymmetrieebene des Aufzeichnungsträgers abgeordnet sind, damit sie in beiden Betriebslagen der Kassette gleichermassen zur Wirkung kommen. Ferner ist hier vorgesehen, dass die zum Zusammenwirken mit nur einem Teilbereich der Breite des Magnetbandes ausgebildeten Andruckelemente 29 und 30 je für sich mindestens bis zu dem Längsrand des Magnetbandes reichen, welcher der in diesem Teilbereich verlaufenden Spur zunächst liegt.

Der Übersichtlichkeit halber werden die vorgenannten Verhältnisse schematisch anhand der Fig. 3 verdeutlicht. Der Träger 28 für die Andruckelemente 29 und 30 ist hier der Einfachheit halber als ein Block dargestellt. Vom Magnetband 16 sind dessen beide Längsränder mit 36 und 37 und dessen Längssymmetrieebene mit 38 bezeichnet. Ein in den Durchbruch 10 eingeführter Magnetkopf ist durch die strichpunktierten Linien 39 angegeben, wobei ersichtlich ist, dass er hinsichtlich seiner Lauffläche breiter als das Magnetband 16 ausgeführt ist, damit das Magnetband mit seiner gesamten Breite über die Lauffläche des Magnetkopfes geführt wird, was für einen gleichmässigen Lauf des Magnetbandes notwendig ist. Dieser Magnetkopf 39 weist in üblicher Weise zwei an seine Lauffläche mündende Magnetkerne 40 und 41 auf, zwischen welchen ein Nutzspalt 42 ausgebildet ist. Die Lage und die Breite der beiden Magnetkerne und damit auch die Lage und die Breite des Nutzspaltes des Magnetkopfes ist dabei so gewählt, dass er in der Längshälfte des Magnetbandes, welcher der Längsrand 36 desselben angehört, eine durch eine Schraffur angegebene Spur 43 abtastet, wenn das Magnetband in der Richtung des Pfeiles 44 fortbewegt wird. Im Bereich des Magnetkopfes 39 drückt dabei das Andruckelement 30 nur in einem Teilbereich der Breite des Magnetbandes dieses an die Lauffläche des Magnetkopfes an. Dieser Teilbereich ist durch die gewählte Breite des Andruckelementes 30 und dessen Lage gegenüber dem Magnetband bzw. dem Magnetkopf bestimmt. Beim vorliegenden Ausführungsbeispiel reicht das Andruckelement 30 etwas über den Längsrand 36 des Magnetbandes 16 hinaus, wobei es sich in der anderen Richtung bis etwas über die Längssymmetrieebene 38 des Magnetbandes 16 erstreckt. An sich könnte aber auch das Andruckelement 30 bereits etwas vor dem Erreichen der Längssymmetrieebene 38 des Magnetbandes 16 enden. Wie ersichtlich wird auf diese Weise ein Teilbereich der Breite des Magnetbandes erfasst, in dem die Spur 43 verläuft. Durch die spiegelbildliche Ausbildung bzw. Anordnung des Andruckelementes 29 zum Andruckelement 30 ist dabei erreicht, dass nach einem Wenden der Magnetbandkassette das Andruckelement 29 die Position des Andruckelementes 30 gegenüber dem Magnetkopf 39 einnimmt, wobei dann von diesem eine in der anderen vom Längsrand 37 begrenzten Längshälfte des Magnetbandes liegende Spur 45 abgetastet wird, was wieder durch eine Schraffur und durch den Pfeil 46 angedeutet ist.

Auf diese Weise ist erreicht, dass jedes der beiden Andruckelemente 29 bzw. 30 nur über einen Teilbereich der Breite des Magnetbandes und nicht über dessen ganze Breite auf das Magnetband drückt, wodurch zufolge der geringen Fläche an der das betreffende Andruckelement am Magnetband anliegt, eine grössere mittlere Flächenpressung entsteht.

Damit ist aber zum Erreichen eines vorgegebenen Anpressdruckes für das Magnetband an die Lauffläche des Magnetkopfes eine entsprechend geringere Federkraft erforderlich, was sich dahingehend auswirkt, dass auch die erforderliche Kraft zum Durchziehen des Magnetbandes zwischen dem Andruckelement und der Lauffläche des Magnetkopfes geringer ist, und somit die Antriebseinrichtung zum Fortbewegen des Magnetbandes auch nur noch eine geringere Kraft aufbringen können muss. Im Gegensatz zur bekannten bisherigen Auffassung, dass das Magnetband über seine ganze Breite an die Lauffläche des Magnetkopfes angedrückt werden muss, wird auch beim erfindungsgemässen Andrücken des Magnetbandes, nämlich einem Andrücken von nur einem Teilbereich seiner Breite, an die Lauffläche des Magnetkopfes, ein derart gutes Andrücken erhalten, dass eine Aufzeichnung oder Wiedergabe vollkommen einwandfrei durchgeführt werden kann.

Wie aus Fig. 3 ersichtlich ist, ist angenommen worden, dass nur ein Magnetkopf 39 vorgesehen ist, wobei dann je nach der Wendelage der Magnetbandkassette jeweils nur eines der beiden Andruckelemente 30 bzw. 29 wirksam ist. Selbstverständlich wäre es aber auch möglich, gleichzeitig in beide Durchbrüche 9 und 10 einen Magnetkopf einzuführen. Ein solcher weiterer Magnetkopf kann als Löschkopf dienen, wenn sein Nutzspalt niveaumässig gleich zum Nutzspalt 42 des Magnetkopfes 39 liegt, damit er die gleiche Spur am Magnetband abtastet, wie der Magnetkopf 39. Hierbei würde allerdings das Andruckelement 29 nicht im Bereich des Nutzspaltes dieses weiteren Magnetkopfes das Magnetband an seine Lauffläche andrücken, sondern im benachbarten Bereich, der in der anderen Längshälfte des Magnetbandes liegt, was aber für einen Löschvorgang nicht nachteilig ist, da bekanntlich zur Löschung wesentlich stärkere Magnetfelder als bei einer Aufzeichnung oder Wiedergabe zur Verfügung stehen und daher ein Andrücken des Magnetbandes im Bereich des Nutzspaltes eines Löschkopfes nicht zwingend notwendig ist.

Wie bereits erwähnt, ist bei dem im Vorstehenden beschriebenen Ausführungsbeispiel vorgesehen, dass die beiden Andruckelemente 30 bzw. 29 jeweils einen Längsrand 36 bzw. 37 des Magnetbandes miterfassen, wodurch einem allfälligen Flattern des Magnetbandes im Bereich des betreffenden Längsrandes mit Sicherheit vorgebeugt ist, und so ein besonders einwandfreies Anliegen des Magnetbandes im Bereich des Nutzspaltes des Magnetkopfes an dessen Lauffläche erhalten wird. Eine solche Massnahme ist zwar als zweckmässig, aber durchaus nicht zwingend notwendig anzusehen. Demgemäss ist beim Ausführungsbeispiel nach Fig. 4 vorgesehen, dass die Andruckelemente 30 bzw. 29 nur etwas breiter ausgebildet sind als die Spuren 43 bzw. 45 am Magnetband 16, so dass die Längsränder 36 bzw. 37 des Magnetbandes nicht miterfasst werden und die Andruckelemente auch nicht über die Längssymmetrieebene 38 des Magnetbandes hinausreichen. Auf diese Weise ist die durch die Andruckelemente 30 bzw. 29 bewirkte mittlere Flächenpressung noch etwas grösser als beim vorgehend beschriebenen Ausführrungsbeispiel, so dass im vorliegenden Fall zum Erreichen eines vorgegebenen Anpressdruckes für das Magnetband an die Lauffläche eines Magnetkopfes die auf die Andruckelemente einwirkende Federkraft noch etwas herabgesetzt werden kann.

Die erfindungsgemässe Massnahmen sind natürlich nicht nur bei Magnetbandkassetten, mit einem wie im Vorstehenden beschriebenen, sogenannten Zweispursystem anwendbar, sondern können im Zusammenhang mit den verschiedenen Spursystemen, wie Einspur oder Mehrspur, angewandt werden. Zur Illustration ist hierzu in Fig. 5 ein Ausführungsbeispiel für ein Vierspursystem angegeben, wie dies beispielsweise zur stereophonen Aufzeichnung bzw. Wiedergabe verwendet wird. Ein bei einem solchen System zur Anwendung gelangender Magnetkopf 39 weist zwei in seine Lauffläche mündende, quer zur Fortbewegungsrichtung des Magnetbandes mit Abstand zueinander liegende Magnetkreise auf, die je eine Spur am Aufzeichnungsträger abtasten. Demgemäss weist der Magnetkopf 39 zwei Magnetkerne 47 und 48 und zwei weitere Magnetkerne 49 und 50 auf, zwischen welchen je ein Nutzspalt 51 bzw. 52 ausgebildet ist. Der Nutzspalt 51 liegt dabei auf einem solchen Niveau, dass er eine Spur 53 am Magnetband 16 abtastet, die dem Längsrand 36 des Magnetbandes unmittelbar benachbart ist. Hingegen ist der Nutzspalt 52 auf einem solchen Niveau angeordnet, dass er eine Spur 54 abtastet, die in der anderen, vom Längsrand 37 des Magnetbandes begrenzten Längshälfte desselben liegt und dabei der Längssymmetrieebene 38 des Magnetbandes unmittelbar benachbart ist. Diese beiden Spuren 53 und 54 werden gleichzeitig in der Abtastrichtung 55 abgetastet. Nach einem Wenden der Kassette werden mit den gleichen Nutzspalten 51 und 52 zwei weitere Spuren 56 und 57 am Magnetband abgetastet, wobei nunmehr in analoger Weise die Spur 56 dem Längsrand 37 des Magnetbandes und die Spur 57 der Längssymmetrieebene 38 des Magnetbandes unmittelbar benachbart ist. Für diese beiden Spuren 56 und 57 gilt die Abtastrichtung 58. Da hier jeweils zwei Spuren, nämlich einerseits 53 und 54 und andererseits 56 und 57, gleichzeitig abgetastet werden, sind die Andruckelemente 30 und 29 hier mit einer solchen Breite ausgeführt, dass sie jeweils etwas über die beiden gleichzeitig abzutastenden Spuren hinausreichen. Das Andruckelement 30 ist dabei den Spuren 53 und 54 und das Andruckelement 29 den Spuren 56 und 57 zugeordnet. Auf diese Weise ist wieder erreicht, dass die Andruckelemente 30 bzw. 29 sich nicht je für sich über die gesamte Breite des Magnetbandes erstrecken, sondern nur je über einen Teilbereich der Breite des Magnetbandes, wodurch ihre Auflagefläche am Magnetband wieder verringert und damit die mittlere Flächenpressung vergrössert ist, so dass zum Erreichen eines vorgegebenen Anpressdruckes für das Magnetband an die Lauffläche eines Magnetkopfes wieder nur eine geringe auf die Andruckelemente wirkende Federkraft erforderlich ist.

Beim vorliegenden Ausführungsbeispiel ist den beiden gleichzeitig abzutastenden Spuren jeweils ein gemeinsames Andruckelement zugeordnet, das mit dem Teilbereich der Breite des Magnetbandes zusammenwirkt, der von diesen beiden gleichzeitig abzutastenden Spuren eingeschlossen wird, wobei demgemäss auch der zwischen diesen beiden gleichzeitig abzutastenden Spuren liegende Teilbereich der Breite des Magnetbandes mitumfasst ist, in dem eine Spur 57 bzw. 54 der anderen beiden gleichzeitig abzutastenden Spuren verläuft, die aber nicht abgetastet wird, wenn die erstgenannten beiden gleichzeitig abzutastenden Spuren abgetastet werden.

Dies bedeutet, dass hier von den beiden Andruckelementen auch jeweils ein Teilbereich der Breite des Magnetbandes mitumfasst wird, in dem zwar eine Spur verläuft, diese aber nicht abgetastet wird. Es wäre daher auch ohne weiteres möglich, diesen Teilbereich der Breite des Magnetbandes, in dem jeweils die einzelne Spur verläuft, die nicht abgetastet wird, von einem Andrücken an die Lauffläche des Magnetbandes auszuschliessen, was einfach dadurch geschehen kann, dass jeder der beiden gleichzeitig abzutastenden Spuren ein eigenes Andruckelement zugeordnet wird, dessen Breite nur etwas grösser ist als die Breite der betreffenden Spur für sich. Damit wäre wieder eine weitere Verringerung der Fläche des Magnetbandes, auf welche die Andruckelemente einwirken, erreichbar.

Beim Ausführungsbeispiel nach Fig. 6 ist ebenfalls ein Spursystem wie beim Ausführungsbeispiel nach Fig. 5 vorgesehen. Hier ist jedoch der Magnetkopf 39 so angeordnet, dass seine Nutzspalte 51 und 52 in der Quersymmetrieebene 11 verlaufen. Dies bedeutet, dass auch bei einer wendbaren Kassette diese nur einen Durchbruch zum Eintreten des Magnetkopfes 39 aufweisen muss, womit dann auch nur ein hier mit 29 bezeichnetes Andruckelement erforderlich ist. Analog zum Ausführungsbeispiel nach Fig. 5 ist auch hier die Breite dieses Andruckelementes 29 so gewählt, dass es den Teilbereich der Breite des Magnetbandes umfasst, in dem die beiden gleichzeitig abzutastenden Spuren 53, 54 bzw. 56, 57 verlaufen. Soll auch hier ein weiterer Magnetkopf, wie beispielsweise wieder ein Löschkopf, mit dem Magnetband in Wirkverbindung zu bringen sein, so sind zwei weitere spiegelbildlich zur Quersymmetrieebene 11 liegende Durchbrüche in der betreffenden Seitenwand der Kassette vorzusehen, wobei dann je nach der Wendelage der Kassette in einen derselben dieser weitere Magnetkopf eintreten kann. Für den Fall, dass dieser weitere Magnetkopf ein Löschkopf ist, sind dann keine weiteren Andruckelemente erforderlich, so dass hier überhaupt mit einem Andruckelement das Auslangen gefunden wird.

Wie aus Vorstehendem ersichtlich, sind eine Reihe von Abwandlungen der beschriebenen Ausführungsbeispiele möglich, ohne dass dabei der Rahmen der Erfindung verlassen wird. Dies gilt insbesondere für die Ausgestaltung der Kassette an sich, das zur Anwendung kommende Spursystem und die Art und Weise, wie die elastischen Andruckelemente an das Magnetband angedrückt werden.

## Patentansprüche

1. Magnetbandkassette (1) zur Unterbringung eines zwischen zwei Wickelkernen (12, 13) verlaufenden Magnetbandes (16), das in seinem Verlauf innerhalb der Kassette längs einer Seitenwand (5) derselben geführt ist, in der mindestens ein Durchbruch (9; 10) vorgesehen ist, durch den mindestens ein zum Abtasten mindestens einer Spur (43; 45; 53; 54; 56; 57) am Magnetband vorgesehener Magnetkopf (39) einführbar und mit seiner Lauffläche am Magnetband über dessen gesamte Breite anlegbar ist, wobei das Magnetband mit einem vom Inneren der Kassette her mit ihm zusammenwirkenden, auf einem in der Kassette vorgesehenen Träger (28) angeordneten, elastischen Andruckelement (29; 30) unter Federkraft gegen die Lauffläche des Magnetkopfes gedrückt wird, dadurch gekennzeichnet, dass das Andruckelement (29; 30) zum Zusammenwirken mit nur einem asymmetrisch zur Längssymmetrieebene (38) des Magnetbandes (16) liegenden Teilbereich der Breite des Magnetbandes (16) ausgebildet ist.

2. Kassette nach Anspruch 1, dadurch gekennzeichnet, dass das Andruckelement (29; 30) mindestens bis zu dem dem Teilbereich zunächst liegenden Längsrand (36; 37) des Magnetbandes (16) reicht (Fig. 3).

3. Kassette nach Anspruch 1 oder 2, die zum Wenden bestimmt ist und zwei Durchbrüche (9, 10) und zwei Andruckelemente (29, 30) aufweist, die spiegelbildlich zu der senkrecht zur die Durchbrüche aufweisenden Seitenwand (5) verlaufenden Quersymmetrieebene (11) der Kassette (1) liegen, dadurch gekennzeichnet, dass die beiden zum Zusammenwirken mit je nur einem Teilbereich der Breite des Magnetbandes (16) ausgebildeten Andruckelemente (29, 30) spiegelbildlich zur Längssymmetrieebene (38) des Magnetbandes angeordnet sind (Fig. 3; 4; 5).

## Claims

1. A magnetic-tape cassette (1) for a magnetic tape (16) which extends inside the cassette between two winding hubs (12, 13) along a cassette side-wall (5) in which at least one aperture (9, 10) is formed through which at least one magnetic head (39) for scanning at least one track (43; 45; 53; 54; 56; 57) on the magnetic tape can be inserted and can be positioned with its head face against the magnetic tape over the full tape-width, the magnetic tape being pressed by spring force against the head face of the magnetic head by an elastic pressure element (29; 30) which is arranged on a support (28) in the cassette and which co-operates with the tape from the inside of the cassette, characterized in that the pressure element (29; 30) is adapted to co-operate with only a part of the width of the magnetic tape (15) which part is situated asymmetrically relative to the longitudinal plane of symmetry (38) of the magnetic tape (15).

2. A cassette as claimed in Claim 1, characterized in that the pressure element (29; 30) extends at least up to that longitudinal edge (36, 37) of the magnetic tape (15) which is disposed nearest said part (Fig. 3).

3. A cassette as claimed in Claim 1 or 2, which is reversible and which has two apertures (9, 10) and two pressure elements (29, 30) which are disposed mirror-symmetrically relative to the transverse plane of symmetry (11) of the cassette (1), which plane extends perpendicularly to the side wall (5) in which the apertures are formed, characterized in that the pressure elements (29, 30) which are each adapted to co-operate with only a part of the width of the magnetic tape (15) are arranged mirror-symmetrically relative to the longitudinal plane of symmetry (38) of the magnetic tape (Fig. 3; 4; 5).

**Revendications**

1. Cassette (1) devant contenir une bande magnétique (16) qui dans cette cassette doit pouvoir se déplacer entre deux moyeux de bobinage (12, 13) et qui lors de ce mouvement est guidée à l'intérieur de la cassette le long d'une paroi de cassette latérale (5) munie d'au moins une ouverture (9, 10) dans laquelle il est possible d'introduire au moins une tête magnétique (39) prévue pour l'exploration d'au moins une piste d'information (43, 45, 53, 54, 56, 57) sur la bande magnétique, la face de tête exploratrice pouvant être amenée contre la bande magnétique sur la totalité de la largeur de la bande; celle-ci étant pressée élastiquement contre la face exploratrice de la tête par un élément de pression élastique (29, 30) qui est placé sur un support (28) prévu dans la cassette et qui coopère avec la bande magnétique depuis l'intérieur de la cassette, caractérisée en ce que l'élément de pression (29, 30) est conçu pour coopérer avec une partie seulement de la largeur de la bande magnétique (16), cette partie de largeur étant asymétrique par rapport au plan de symétrie longitudinal de la bande.

2. Cassette selon la revendication 1, caractérisée en ce que l'élément de pression (29, 30) s'étend au moins jusqu'au bord longitudinal (36, 37) de la bande magnétique (16) situé le plus près de ladite partie de largeur (fig. 3).

3. Cassette selon la revendication 1 ou 2, cette cassette pouvant être utilisée selon deux positions différentes et comportant deux ouvertures (9, 10) ainsi que deux éléments de pression (29, 30) qui occupent des positions symétriques par rapport au plan de symétrie transversal (11) de la cassette (1), ce plan étant perpendiculaire à la paroi latérale (5) comportant les ouvertures, caractérisée en ce que les deux éléments de pression (29, 30) conçus chacun pour coopérer avec une partie seulement de la largeur de la bande magnétique (16) occupent des positions symétriques par rapport au plan de symétrie longitudinal (38) de la bande magnétique (fig. 3, 4, 5).

Fig.1

Fig.2

Fig.3

Fig.4

Fig.5

Fig.6